# EUROPÄISCHE PATENTSCHRIFT

(11) **EP 3 375 666 B1**
(45) Veröffentlichungstag und Bekanntmachung des Hinweises auf die Patenterteilung: **29.05.2019**
(21) Anmeldenummer: 17199865.1
(22) Anmeldetag: 03.11.2017
(51) Int. Cl.: B60R 9/06, B60R 9/10

(54) **LASTENTRÄGER, INSBESONDERE FAHRRADTRÄGER**
LOAD CARRIER, PARTICULARLY A BICYCLE CARRIER
PORTE-CHARGE, EN PARTICULIER PORTE-VÉLO

(30) Priorität: 16.03.2017 DE 202017101538 U
(43) Veröffentlichungstag der Anmeldung: 19.09.2018
(73) Patentinhaber: Carman Enterprise Co., Ltd., Yuhang District Hangzhou Zhejiang 311121 (CN)
(72) Erfinder: Li, Xianwei, Hangzhou P.R. (CN)
(74) Vertreter: Paul & Albrecht Patentanwälte PartG mbB

(56) Entgegenhaltungen:
- DE-A1-102005 061 449
- DE-A1-102009 022 622
- FR-A1- 2 769 880
- US-A- 6 152 341
- US-A1- 2008 061 543

## Beschreibung

Die Erfindung betrifft einen Lastenträger, insbesondere Fahrradträger, für die Deichsel eines Anhängers, mit einer an der Deichsel zu befestigenden Basis und einer an der Basis gehaltenen Trageinrichtung, die wenigstens eine Aufnahme für eine Last, insbesondere ein Fahrrad aufweist.

Anhänger, wie etwa Wohnwagenanhänger, können eine Deichsel aufweisen, über welche diese mit einem Zugfahrzeug verbindbar sind. Die Deichsel umfasst in der Regel zwei schräg nach vorne, V-förmig zusammenlaufende Holme, die an ihrem vorderen Ende eine Kupplung zur Verbindung mit dem Zugfahrzeug aufweisen und an ihren auseinander laufenden, hinteren Enden mit dem Anhänger verbunden sind.

Es ist bekannt, Anhängerdeichseln für die Befestigung von Fahrradträgern zu Nutzen. Ein an einer Deichsel zu befestigender Fahrradträger ist beispielsweise aus der DE 20 2010 000 367 U1 vorbekannt. Dieser umfasst ein als Basis dienendes C-förmiges Rohrprofil, welches mittels U-förmiger Schellen an den beiden Holmen der Deichsel befestigt ist und an dem eine Trageinrichtung mit zwei Aufnahmen für jeweils ein Fahrrad gehalten ist.

Problematisch an derartigen Fahrradträgern ist, dass diese in ihrem an der Deichsel montierten Zustand den Zugang zu dem vorderen Bereich des Anhängers erschweren. In dem vorderen Anhängerbereich befindet sich oftmals ein Stauraum, welcher mit einer Klappe verschlossen ist, die zu der Vorderseite des Anhängers, also in Richtung der Deichsel aufgeklappt wird. Ist ein vorbekannter Fahrradträger auf der Deichsel montiert, kann die Klappe des Stauraums in der Regel nicht mehr geöffnet werden und darin befindliche Objekte sind nicht zugänglich.

Dieser Problematik wird gemäß der DE 295 12 566 U1 damit begegnet, dass der Fahrradträger mit einem Klapprahmen versehen wird, über welchen die Trageinrichtung mit der Basis verbunden ist. Dann kann die Trageinrichtung zusammen mit daran gehaltenen Fahrrädern im montierten Zustand nach vorne, also von dem Anhänger weg, geklappt werden, wodurch Platz für den Zugriff auf den vorderen Bereich des Anhängers geschaffen wird. Im zurückgeklappten Zustand der Trageinrichtung kann insbesondere eine im vorderen Bereich des Anhängers befindlich Klappe geöffnet werden und Objekte in einem von der Klappe verschlossenen Stauraum sind zugänglich.

An diesen Fahrradträgern wird teilweise als nachteilig erachtet, dass die Trageinrichtung, insbesondere wenn an dieser zwei Fahrräder befestigt sind, nur mit vergleichsweise hohem Kraftaufwand gekippt werden kann. Das Wegklappen für den Zugriff auf den Stauraum im vorderen Anhängerbereich ist daher insbesondere für ältere Personen oder Damen mühselig. Ein weiterer Nachteil besteht darin, dass die Trageinrichtung und insbesondere daran befestigte Fahrräder infolge des Wegklappens ein über die Deichsel mit dem Anhänger verbundenes Zugfahrzeug, beispielsweise den Kofferraum eines den Anhänger ziehenden PKWs, treffen und infolge dessen beschädigen können. Auch besteht die Gefahr, dass sich die Fahrräder im weggeklappten Zustand von der Trageinrichtung lösen, woraus ebenfalls Beschädigungen der Fahrräder, eines Zugfahrzeuges, der Deichsel oder auch des Fahrradträgers resultieren können und was eine Verletzungsgefahr für Benutzer birgt.

Darüber hinaus sind Lastenträger zur Befestigung an einem Zugfahrzeug bekannt. Die FR2769880 und die US 6,152,341 offenbaren jeweils einen Fahrradträger zur Befestigung an einer Anhängerkupplung eines Fahrzeugs. Ausgehend von dem Stand der Technik ist es daher eine Aufgabe der vorliegenden Erfindung, einen Lastenträger, insbesondere Fahrradträger anzugeben, der die vorstehenden Nachteile vermeidet.

Diese Aufgabe wird durch einen Lastenträger mit den Merkmalen des Anspruchs 1 gelöst.

Grundgedanke der vorliegenden Erfindung ist es somit, einen Lastenträger, insbesondere Fahrradträger für eine Deichsel mit einem Schiebemechanismus zu versehen, über welchen die Trageinrichtung bequem aus einer ersten eingefahrenen, dem Anhänger näheren Endstellung in eine zweite ausgefahrene, von dem Anhänger weiter entfernte Endstellung verschoben werden kann. In der ausgefahrenen Endstellung gibt die Trageinrichtung den Raum unmittelbar vor dem Anhänger für den Zugriff auf einen im vorderen Bereich des Anhängers befindlichen Stauraum frei und es kann insbesondere eine dort vorhandene, den Stauraum verschließende Klappe von einem Benutzer geöffnet werden.

Für das bloße Verschieben der Trageinrichtung über die beiden erfindungsgemäß vorgesehenen Schiebelemente ist nur ein vergleichsweise geringer Kraftaufwand nötig, sodass beispielsweise auch ältere Personen und Damen die Trageinrichtung samt einer daran befestigten Last, beispielsweise daran befestigten Fahrrädern, bequem in eine den Zugriff ermöglichende Stellung gebracht werden können. Darüber hinaus wird zuverlässig verhindert, dass Beschädigung eines an der Deichsel befestigten Zugfahrzeuges auftreten, da die Trageinrichtung und daran befestigte Last(en) in ihrer Ausrichtung nicht verändert, konkret nicht in Richtung des Zugfahrzeuges gekippt werden. Trägt die Trageinrichtung eines oder mehrere Fahrräder, sind diese zu allen Zeiten zumindest im Wesentlichen vertikal orientiert und auch das Risiko, dass sich die Fahrräder lösen ist gegenüber den vorbekannten Fahrradträgern deutlich reduziert.

Als besonderes geeignet hat es sich erwiesen, wenn die Schiebeführungen des erfindungsgemäßen Lastenträgers als Teleskopführungen ausgebildet sind, die jeweils zwei verschieblich aneinander gelagerte Teleskopelemente aufweisen. Die Teleskopelemente können beispielsweise als im Querschnitt vier-, insbesondere rechteckige Rohre oder als um Querschnitt U-förmig oder L-förmige Profile ausgebildet sein.

Sind die Schiebeführungen als Teleskopführungen ausgebildet, die jeweils zwei Teleskopelemente aufweisen, ist zweckmäßiger Weise jeweils ein Teleskopelement einer Teleskopführung an der Basis befestigt und das jeweils andere Teleskopelement einer Teleskopführung an der Trageinrichtung.

Weiterhin kann vorgesehen sein, dass jeweils ein Teleskopelement einer Teleskopführung als Innenteleskop und das jeweils andere Teleskopelement der Teleskopführung als Außenteleskop ausgebildet ist. Dann ist bevorzugt die Basis an den Innenteleskopen bei der Teleskopführung und die Trageinrichtung an den Außenteleskopen beider Teleskopführungen befestigt.

Die Schiebeführungen können Gleitlager aufweisen, um die Verschieblichkeit zu gewährleisten. Besonders zweckmäßig ist es jedoch, für die Schiebeführungen jeweils wenigstens einen Rollensatz mit jeweils wenigstens zwei Rollen vorzusehen, über den die Trageinrichtung relativ zu der Basis verschiebbar geführt ist. Ein solcher Rollensatz gewährleistet eine besonders geringe Reibung und ist gegen Umwelteinflüsse relativ unempfindlich.

Für den Fall, dass die Schiebeführungen als Teleskopführungen mit jeweils zwei Teleskopelementen ausgebildet sind, ist dann insbesondere an jedem Teleskopelement jeweils eine Rolle gelagert und liegen dann bevorzugt jede der beiden Rollen mit ihrer Mantelfläche an dem jeweils anderen Teleskopelement, also an demjenigen Teleskopelement, an dem die jeweilige Rolle nicht gelagert ist, an. Die Rollen liegen insbesondere mit ihrer Mantelfläche jeweils an einer Innenfläche des jeweils anderen Teleskopelementes an. Die Rollen sind ferner bevorzugt an gegenüberliegenden axialen Endbereichen der beiden Teleskopelemente der jeweiligen Teleskopführung angeordnet.

Alternativ oder zusätzlich kann vorgesehen sein, dass in jeweils einem Teleskopelement der Teleskopführung wenigstens eine sich in dessen Längsrichtung erstreckende Nut vorgesehen ist, insbesondere zwei sich in dessen Längsrichtung erstreckende Nuten vorgesehen sind. Ein jeweils anderes Teleskopelement jeder Teleskopführung weist dann wenigstens einen sich in dessen Längsrichtung erstreckenden Vorsprung, insbesondere zwei sich in dessen Längsrichtung erstreckende Vorsprünge auf. Die Querschnittsform des wenigstens einen Vorsprungs ist dabei korrespondierend zu der Querschnittsform der wenigstens einen Nut ausgebildet und der wenigstens eine Vorsprung ist in der wenigstens einen Nut angeordnet. Sind jeweils zwei Nuten in dem einen Teleskopelement vorgesehen und zwei Vorsprünge in dem anderen Teleskopelement, sitzt in jedem der beiden Vorsprünge jeweils eine Nut. Die wenigstens eine Nut und der wenigstens eine Vorsprung zeichnen sich ferner bevorzugt durch einen L-förmigen Querschnitt aus. Dies ermöglicht es, dass die beiden Teleskopelemente, wenn der Vorsprung in der Nut bzw. die Vorsprünge in den Nuten sitzen, in Längsrichtung gegeneinander verschiebbar sind, jedoch nicht in einer Richtung orthogonal zu der Längsrichtung bewegt werden können, sodass sie miteinander verbunden bleiben. Bei dem Vorsprung bzw. den Vorsprüngen handelt es sich insbesondere um (eine) Führungschiene(n), die bevorzugt von einer Seite eines der beiden Teleskopelemente abragt bzw. abragen. Die Führungsschiene(n) können, um eine Teleskopanordnung zu erhalten, in die Nut(en) eingeschoben werden.

Eine weitere vorteilhafte Ausführungsform zeichnet sich dadurch aus, dass die Basis und die Trageinrichtung über genau zwei Schiebeführungen miteinander verbunden sind, und insbesondere die Basis wenigstens zwei sich zumindest im Wesentlich parallel zueinander erstreckende rohr- oder stangenförmige Basiselemente mit bevorzugt rundem oder viereckigem Querschnitt umfasst, und von jedem Basiselement ein axiales Ende an der einen Schiebeführung und das jeweils andere axiale Ende an der anderen Schiebeführung befestigt ist.

Die Schiebeführungen erstecken sich ferner bevorzugt zumindest im Wesentlichen parallel zueinander.

Was die Länge des Schiebeweges angeht, so beläuft sich diese insbesondere auf wenigstens 25 cm, bevorzugt wenigstens 30 cm, besonders bevorzugt wenigstens 35 cm.

Um zu vermeiden, dass sich die Trageinrichtung zu weit aus ihrer eingefahrenen Einstellung herausbewegen kann, ist in bevorzugter Ausgestaltung ferner vorgesehen, dass der Schiebeweg zumindest in der ausgefahrenen Endstellung durch wenigstens einen Endstellungsanschlag begrenzt ist. Bevorzugt ist der Schiebeweg in beiden Endstellungen durch Endstellungsanschläge begrenzt.

Gemäß einer weiteren bevorzugten Ausgestaltung ist die Anordnung derart getroffen, dass die Trageinrichtung bei bestimmungsgemäßer Montage horizontal beweglich ist. Alternativ ist es möglich, dass eine zur ausgefahrenen Endstellung hin bevorzugt allenfalls leicht abfallend geneigte Bewegung über die Schiebeführungen erfolgt.

In Weiterbildung sind ferner Arretiermittel vorgesehen, mittels derer wenigstens eine Schiebeführung in der eingefahrenen Einstellung arretiert werden kann. Die Arretiermittel umfassen bevorzugt wenigstens eine Arretierschraube und/oder wenigstens einen Arretierpin.

In Weiterbildung ist ferner vorgesehen, dass die wenigstens eine Aufnahme für eine Last zwei längliche Tragschienen, die jeweils obenseitig insbesondere U- oder V-förmige Nuten für die Aufnahme eines Rades eines Fahrrades bilden, umfasst, wobei die beiden Tragschienen auf einer gemeinsamen Achse und in axialer Richtung beabstandet zueinander angeordnet sind, bevorzugt um wenigstens 20 cm, besonders bevorzugt um wenigstens 30 cm. Zwischen den beiden Tragschienen ist dann Platz für Einrichtungen der Deichsel, beispielsweise eine Kupplungskopfbefestigung, ein Stützrad, insbesondere in einer oberen Position, eine über die Deichsel nach oben hinausragende Kurbel für die Höhenverstellung eines Stützrades oder dergleichen. Die Trageinrichtung kann dann in die ausgefahrene Endstellung geschoben werden, ohne dass die Tragschienen mit Deichseleinrichtungen kollidieren.

Gemäß der Erfindung weist die Trageinrichtung ein Grundelement auf, an welchem die wenigstens eine Aufnahme für eine Last gehalten ist, und welches eine in Richtung der ausgefahrenen Einstellung hin offene Ausnehmung zur Aufnahme einer Einrichtung der Deichsel in der ausgefahrenen Einstellung der Trageinrichtung aufweist. Das Grundelement ist insbesondere als B- oder Doppel-S-förmiges Rohrprofil ausgebildet, was sich als besonders geeignet erwiesen hat.

In der Zeichnung ist die Erfindung anhand zweier Ausführungsbeispiele näher veranschaulicht. Es zeigen
- Figur 1: ein erstes Ausführungsbeispiel eines erfindungsgemäßen Fahrradträgers in perspektivischer Darstellung von schräg vorne;
- Figur 2: eine Vorderansicht des Fahrradträgers aus Figur 1;
- Figur 3: einen Längsschnitt durch eine Teleskopführung des Fahrradträgers aus den Figuren 1 und 2, wobei die Trageinrichtung in der ersten, eingefahrenen Endstellung gezeigt ist;
- Figur 4: einen Längsschnitt durch eine Teleskopführung des Fahrradträgers aus den Figuren 1 und 2, wobei die Trageinrichtung in der zweiten, ausgefahrenen Endstellung gezeigt ist;
- Figuren 5 bis 10: den Fahrradträger aus den Figuren 1 bis 4 in verschiedenen Ansichten im an der Deichsel eines Anhängers montierten Zustand;
- Figur 11: einen Querschnitt durch eine der beiden Teleskopführungen des Fahrradträgers aus den Figuren 1 bis 10 im arretierten Zustand;
- Figur 12: einen Querschnitt durch eine der beiden Teleskopführungen des Fahrradträgers aus den Figuren 1 bis 10 im nichtarretierten Zustand;
- Figuren 13 bis 15: einen Längsschnitt durch eine der beiden Teleskopführungen eines zweiten Ausführungsbeispiels eines erfindungsgemäßen Fahrradträgers, wobei die Trageinrichtung in der ersten, eingefahren Endstellung, in der zweiten, ausgefahrenen Endstellung bzw. einer zwischen der ersten und zweiten Endstellung liegenden Zwischenstellung gezeigt ist; und
- Figur 16: einen Querschnitt durch eine der beiden Teleskopführungen des Fahrradträgers aus den Figuren 13 bis 15.

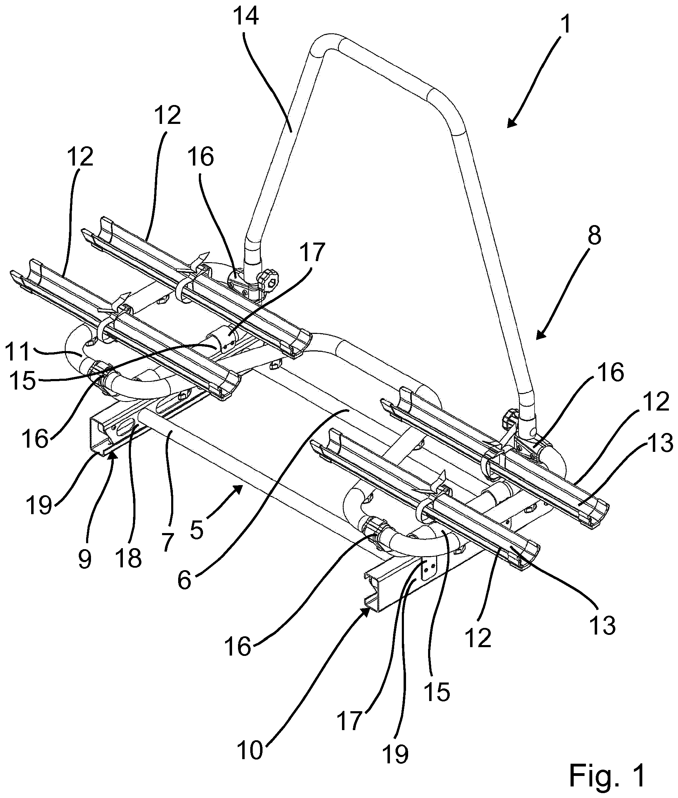

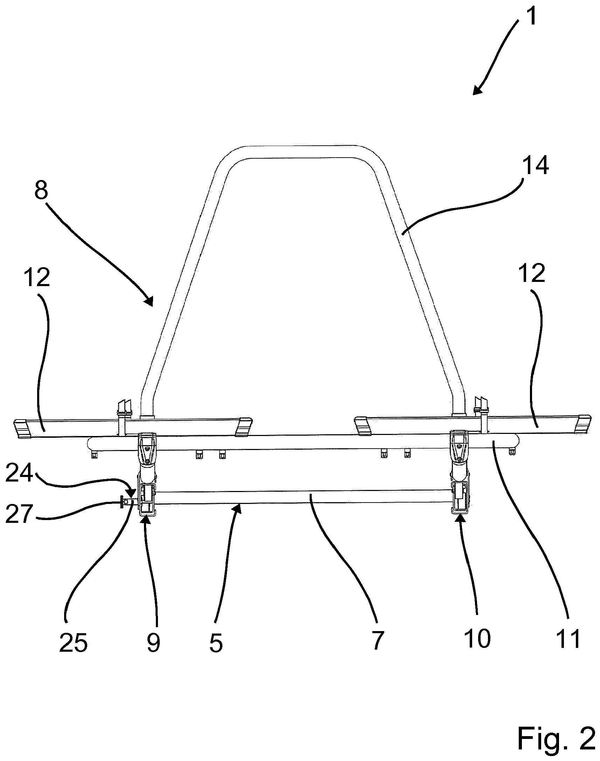

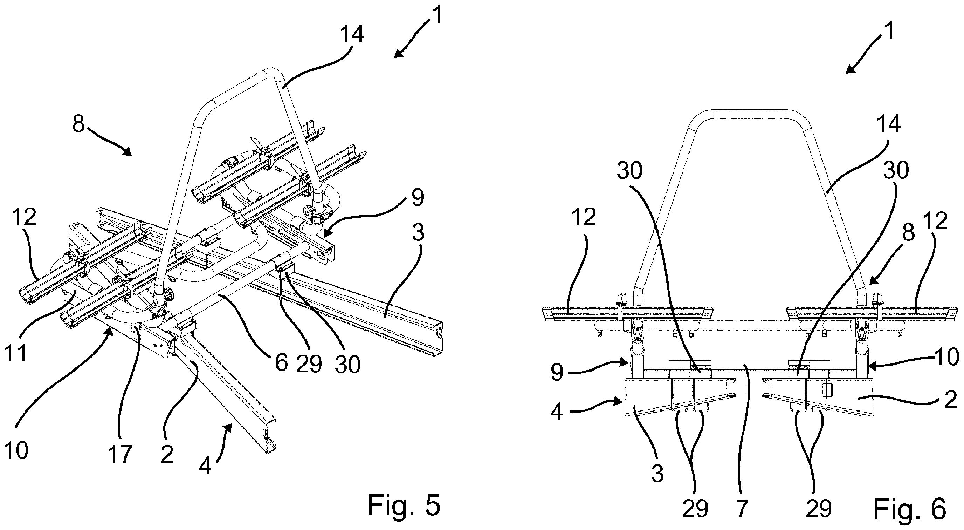

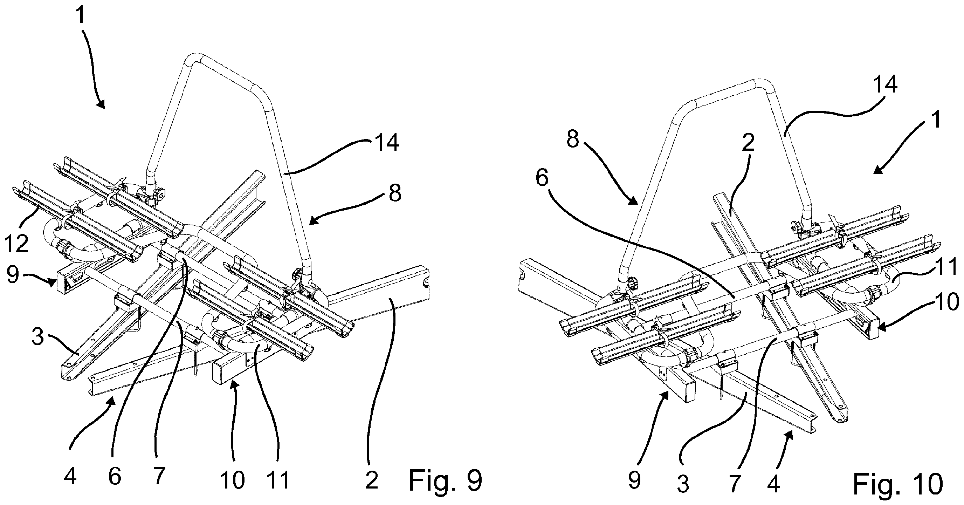

Die Figuren 1 bis 10 zeigen ein erstes Ausführungsbeispiel eines erfindungsgemäßen Fahrradträgers 1, wobei der Fahrradträger 1 in den Figuren 1 bis 4 im nicht montierten Zustand und in den Figuren 5 bis 10 in einem an der zwei V-förmig zusammenlaufende Holme 2, 3 umfassenden Deichsel 4 eines in den Figuren nicht dargestellten Wohnwagenanhängers gezeigt ist.

Der Fahrradträger 1 umfasst eine an der Deichsel 4 zu befestigende Basis 5, die vorliegend durch zwei rohrförmige Basiselemente 6, 7 gebildet wird, eine Trageinrichtung 8 für zwei in den Figuren nicht dargestellte Fahrräder und zwei Teleskopführungen 9, 10, über welche die Basis 5 und die Trageinrichtung 8 miteinander verbunden sind.

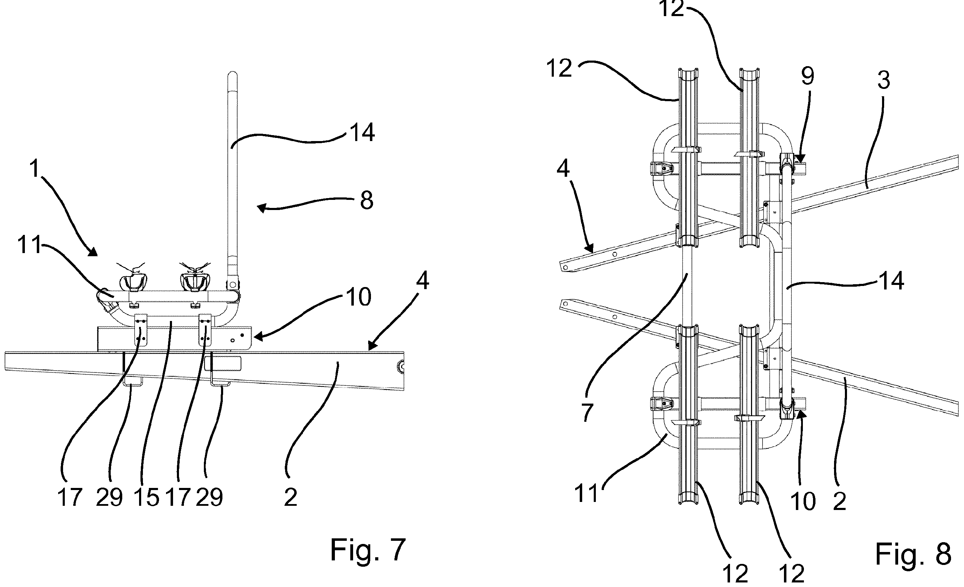

Die Trageinrichtung 8 weist einen Tragrahmen 11 auf, welcher vorliegend durch ein in der Aufsicht (vgl. Figur 8) in etwa B-förmiges Rohrprofil gebildet wird. An dem Tragrahmen 11 sind insgesamt vier Tragschienen 12 für zwei Fahrräder befestigt. Jeweils zwei Tragschienen 12 sind dabei, wie in den Figuren erkennbar, auf einer gemeinsamen Achse und in axialer Richtung beabstandet zueinander angeordnet, wobei der Abstand zwischen jeweils zwei Tragschienen 12 vorliegend etwa 40 cm beträgt. Jede Tragschiene 12 weist obenseitig eine vorliegend U-förmige Nut 13 für die Aufnahme des Rades eines Fahrrads auf.

Von dem Tragrahmen 11 ragt ein Befestigungsbügel 14 senkrecht hoch, an welchem in die Nuten 13 eingestellte Fahrräder über in den Figuren nicht dargestellte, verstellbare Klemmstangen befestigt werden können.

An den Befestigungsbügel 14 schließen sich unterseitig zwei U-förmige Rohrprofile 15 an, die sich parallel zueinander erstrecken und mit denen der Tragrahmen 11 über insgesamt vier Verbindungselemente 16 verbunden ist. Von den beiden U-förmigen Rohrprofilen 15 ist jeweils eines an der Oberseite einer Teleskopführung 9, 10 mittels jeweils zweier U-förmiger Fixierelemente 17 befestigt.

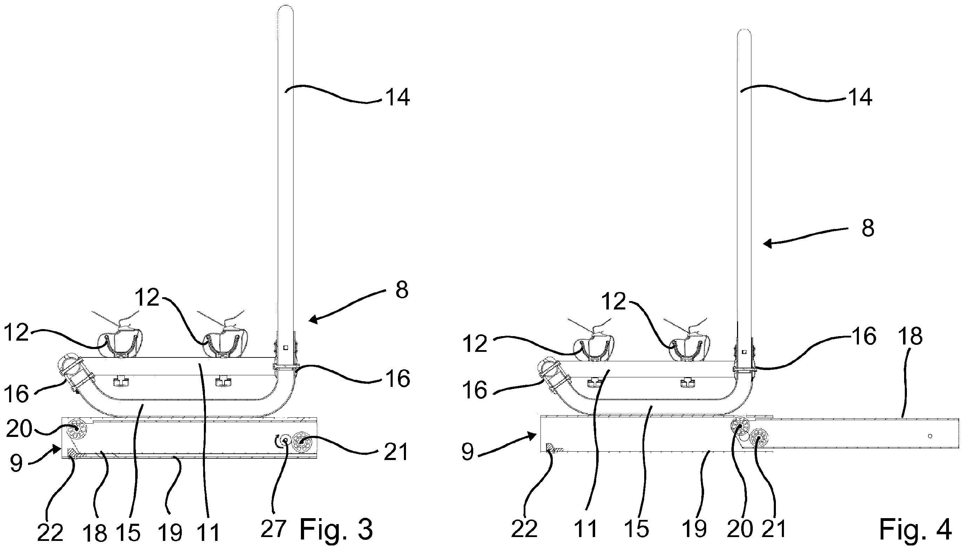

Die Teleskopführungen 9, 10 sind erfindungsgemäß derart ausgebildet und angeordnet, dass die Trageinrichtung 8 mittels dieser relativ zu der Basis 5 von einer eingefahrenen, dem Wohnwagenanhänger näher liegenden Endstellung, die in den Figuren 1, 3 und 5 bis 10 dargestellt ist, in eine ausgefahrene, von dem Wohnwagenanhänger weiter entfernt liegende Endstellung, die in der Figur 4 dargestellt ist, linear verschieblich ist. Der Schiebeweg, welcher mittels der beiden Teleskopführungen 9, 10 bereitgestellt wird, beträgt vorliegend etwa 40 cm.

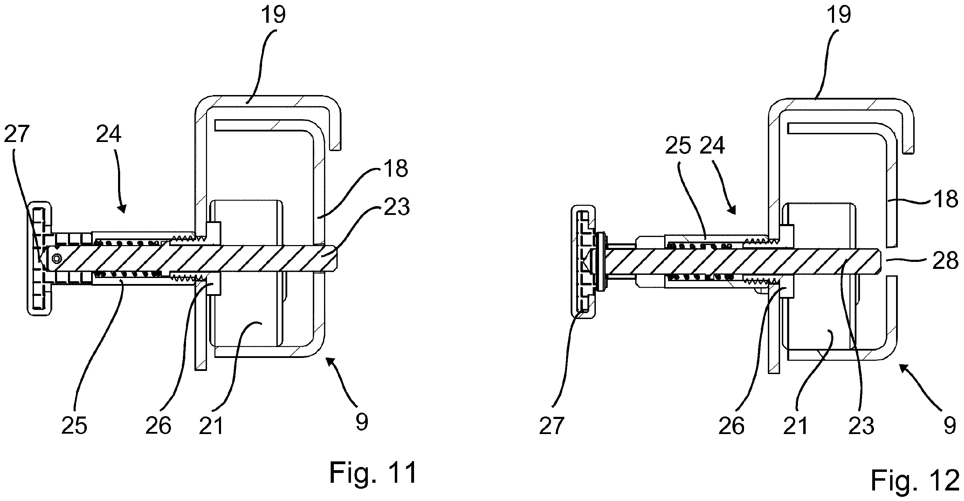

Die Teleskopführungen 9, 10 erstrecken sich parallel zueinander und weisen jeweils zwei verschieblich aneinander gelagerte Teleskopelemente 18, 19 auf. Dabei ist jeweils ein Teleskopelement als Innenteleskop 18 und das jeweils andere Teleskopelement als ein das Innenteleskop umgebende Außenteleskop 19 ausgebildet. Die Innenteleskope 18 und die Außenteleskope 19 sind jeweils durch im Querschnitt C-förmige Rohrprofile gebildet, wobei die Schnittdarstellungen aus den Figuren 11 und 12 den hinteren axialen Endbereich einer Teleskopführung 9 zeigen, in welchem das Außenteleskop 19 im Querschnitt L-förmig ist, da die Teleskopführung 19, wie in der Figur 5 erkennbar, im hinteren axialen Endbereich nach unten offen ist.

An den Innenteleskopen 18 der Teleskopführungen 9, 10 sind, wie in den Figuren erkennbar, die axialen Enden der beiden rohrförmigen Basiselemente 6, 7 der Basis 5 befestigt. Die Innenteleskope 18 bilden somit im montierten Zustand ruhende Teleskopelemente, gegenüber denen die Außenteleskope 19 verschiebbar sind.

Jede der beiden Teleskopführungen 9, 10 weist einen Rollensatz mit jeweils zwei Rollen 20, 21 auf, über den die Trageinrichtung 8 relativ zu der Basis 5 verschiebbar geführt ist und welcher eine besonders reibungsfreie Bewegung ermöglicht. Bei beiden Teleskopführungen 9, 10 ist jeweils eine Rolle 20 an dem Innenteleskop 18 und eine Rolle 21 an dem Außenteleskop 19 gelagert und zwar jeweils an einer seitlichen Wandung in einem axialen Endbereich von Innen- 18 bzw. Außenteleskop 19. Wie insbesondere der Figur 3 entnommen werden kann, welche die Teleskopführung 9 im Schnitt zeigt, sind die Rollen 20, 21 konkret an gegenüberliegenden axialen Endbereichen von Innen- 18 und Außenteleskop 19 gelagert. Die Rollen 20, 21 sind ferner derart angeordnet, dass jede Rolle 20, 21 mit ihrer Mantelfläche an einer Innenfläche des jeweils anderen Teleskopelementes 18, 19 anliegt. Konkret liegt die jeweils an dem Außenteleskop 19 gelagerte Rolle 21 mit ihrer Mantelfläche innenseitig an der Unterseite des Innenteleskops 18 an und die an dem Innenteleskop 18 gelagerte Rolle innenseitig an der Oberseite des Außenteleskops 19, wie insbesondere den Figuren 3 und 4 entnehmbar ist. Die beiden Rollen 20, 21 haben den gleichen Durchmesser und sind, damit eine Anlage an der Ober- bzw. Unterseite erzielt wird, in unterschiedlichen Höhen an dem jeweiligen Teleskopelement 18, 19 gelagert. Das Innen- 18 und das Außenteleskop 19 sind ferner alleine über die beiden Rollen aneinander gelagert und berühren sich nicht, so dass eine besonders reibungsfreie Bewegung des Außenteleskops 19 relativ zu dem Innenteleskop 18 möglich ist.

Jede Teleskopführung 9, 10 weist weiterhin einen durch einen Gummistopper 22 gebildeten Endstellungsanschlag auf, welcher, wie in den Figuren 3 und 4 erkennbar, innenseitig an der Unterseite des Außenteleskops 19 befestigt ist und zwar in dem in den Figuren 3 und 4 nach links weisenden axialen Endbereich des Außenteleskops 19. Der Gummistopper 22 kommt in der eingefahrenen Endstellung an dem Innenteleskop 18 in Anlage, so dass das Außenteleskop 18 nicht weiter geschoben werden kann. In Figur 3 ist die fast erreichte, eingefahrene Endstellung gezeigt. Die Begrenzung in der ausgefahrenen Endstellung wird dadurch erreicht, dass die Rolle 20 in Anlage an einen Sicherungspin 23 eines Arretiermechanismus 24 der Teleskopführung 9 kommt.

Der Arretiermechanismus 24 umfasst, wie in den Figuren 3 und 4 erkennbar, eine von dem Außenteleskop 19 außenseitig abragende Führungshülse 25, die horizontal sowie quer zur Längsrichtung der Teleskopführung 9 orientiert ist und durch welche sich der Sicherungspin 23 erstreckt. Die Führungshülse 25 ist über eine sich durch ein Loch in der Seitenwandung des Außenteleskops 19 erstreckende Fixierhülse 26 mit einem Außengewinde, auf welches die Führungshülse 25 aufgeschraubt ist, befestigt. An dem in den Figuren 3 und 4 nach links weisenden axialen Ende des Sicherungspins 23 ist ein Griff 27 vorgesehen, über welchen ein Benutzer die Arretierung lösen kann. In der Arretierposition in der vollständig eingefahrenen Endstellung greift der Sicherungspin 23 in eine zu diesem Zweck an entsprechender Position in dem Innenteleskop 18 vorgesehene Arretieröffnung 28 ein. Dieser Zustand ist in der Figur 11 dargestellt. Damit die Teleskopführungen 9, 10 betätigt, also die Außenteleskope 19 gegenüber den Innenteleskopen 18 verschoben werden können, muss ein Benutzer den Sicherungspin 23 aus der Arretieröffnung 28 herausbringen, indem er den Griff 27 dreht . Der Nicht-arretierte Zustand ist in der Figur 12 dargestellt.

Im montierten Zustand ist der Fahrradträger 1, wie in den Figuren 5 bis 10 erkennbar, an der Deichsel 4 eines Wohnwagenanhängers befestigt. Konkret sind die beiden rohrförmigen Basiselemente 6, 7 jeweils mittels zwei U-förmiger Schellen 29, die einen Holm 2, 3 umgreifen und mit einem an dem jeweiligen rohrförmigen Basiselement 6, 7 befestigten Fixierkörper 30 verbunden sind, an der Deichsel 4 befestigt. Die Teleskopführungen 9, 10 erstrecken sich im ordnungsgemäß montierten Zustand horizontal, so dass die Trageinrichtung 8 mittels dieser horizontal verschieblich ist. An der Trageinrichtung 8 sind zwei Fahrräder befestigt, wobei in jeder der vier Tragschienen 12 ein Rad eines Fahrrades angeordnet ist.

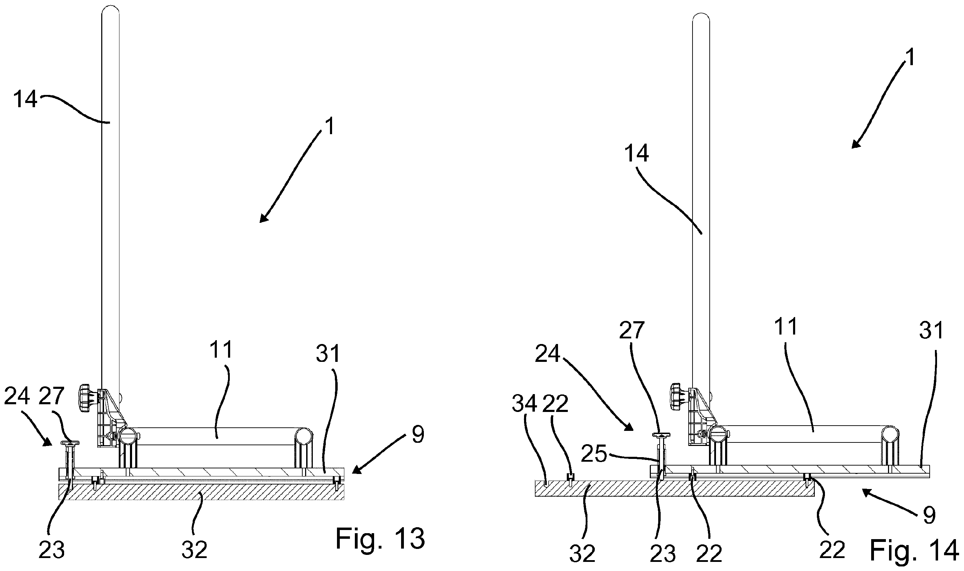

In den Figuren 13 bis 16 ist eine zweite Ausführungsform eines erfindungsgemäßen Fahrradträgers 1 gezeigt, der sich von demjenigen aus den Figuren 1 bis 12 allein dadurch unterscheidet, dass die Teleskopführungen 9, 10 anders ausgebildet sind und der Arretiermechanismus 24 an einer anderen Stelle vorgesehen ist. Gleiche Bauteile sind entsprechend mit gleichen Bezugsziffern versehen.

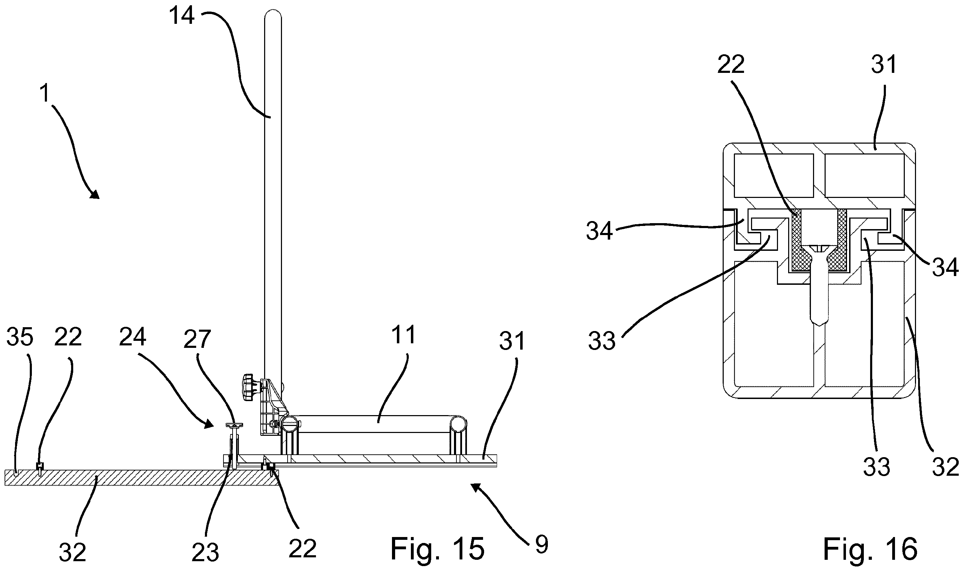

Dabei zeigen die Figuren 13 bis 15 einen Längsschnitt durch eine der beiden Teleskopführungen 9, 10 des Fahrradträgers 1 und die Figur 16 zeigt einen Querschnitt durch die Teleskopführung 9.

Wie aus den Figuren hervorgeht, umfassen die beiden Teleskopführungen 9, 10 der zweiten Ausführungsform kein Innen- und Außenteleskop sondern ein oberes Teleskopelement 31 und ein unteres Teleskopelement 32, die verschieblich aneinander gelagert sind. Dabei sind an den beiden unteren Teleskopelementen 32 die axialen Enden der beiden rohrförmigen Basiselemente 6, 7 der Basis 5 befestigt und an den beiden oberen Teleskopelementen 31 die Trageinrichtung 8.

Es sind bei dem zweiten Ausführungsbeispiel ferner keine Rollen vorgesehen, sondern das jeweils untere Teleskopelement 32 jeder Teleskopführung 9, 10 weist zwei sich in dessen Längsrichtung erstreckende im Querschnitt L-förmige Nuten 33 und das jeweils obere Teleskopelement 31 zwei sich in dessen Längsrichtung erstreckende im Querschnitt ebenfalls L-förmige Vorsprünge 34 auf. Die beiden Vorsprünge 34 des oberen Teleskopelementes 31 sind dabei jeweils in die Nuten 33 des unteren Teleskopelementes 32, wie in der Figur 16 erkennbar, eingeschoben, so dass ein Verschieben des einen Teleskopelementes 31 gegenüber dem anderen Teleskopelement 32 in Längsrichtung möglich ist, die Teleskopelemente 31, 32 jedoch - aufgrund der L-Form - nicht voneinander abhoben werden können.

Der Arretiermechanismus 24, welcher analog zu demjenigen des Ausführungsbeispiels aus den Figuren 1 bis 12 ausgebildet ist, befindet sich bei dem zweiten Ausführungsbeispiel in dem in den Figuren 13 bis 15 nach links weisenden axialen Endbereich der Teleskopführung 9 und der Sicherungspin 23 erstreckt sich, wie in den Figuren erkennbar, nicht horizontal sondern vertikal durch das obere Teleskopelement und greift im arretierten Zustand in eine Aussparung 35 an der Oberseite des unteren Teleskopelementes 32 ein.

Da keine Rollen vorhanden sind, wird bei dem zweiten Ausführungsbeispiel die Begrenzung des Schiebeweges in beiden Endstellungen durch Endstellungsanschläge bildende Gummistopper 22 erreicht, konkret durch insgesat drei Gummistopper je Teleskopführung 9, 10. Von denen sind jeweils zwei in dem unteren Teleskopelement 32 an gegenüberliegenden axialen Endbereichen befestigt und einer an dem oberen Teleskopelement 31 derart, dass er in den beiden Endstellungen an jeweils einem der unten befestigten Gummistopper 22 anliegt.

Der in den Figuren 13 bis 16 dargestellte Fahrradträger 1 wird auf die gleiche Weise an einer Deichsel 4 eines Anhängers, insbesondere Wohnwagenanhängers montiert, wie vorstehend für das erste Ausführungsbeispiel beschrieben und in den Figuren 5 bis 10 für dieses dargestellt. Es können ferner in ebenfalls analoger Weise zwei Fahrräder von der Trageinrichtung 8 des in den Figuren 13 bis 16 dargestellten Fahrradträgers 1 aufgenommen werden.

Ein Stauraum im vorderen Bereich des Wohnwagenanhängers ist, wenn der in den Figuren 1 bis 12 oder 13 bis 16 dargestellter Fahrradträger 1 an der Deichsel 4 des Anhängers montiert und an diesem zwei Fahrräder befestigt sind, weiterhin bequem zugänglich. Möchte ein Benutzer etwas aus dem Stauraum herausnehmen und/oder etwas in diesem unterbringen, löst er zunächst den Arretiermechanismus 24 durch Drehen des Griffs 27 und bringt die Trageinrichtung 8 von der eingefahrenen, dem Wohnwagenanhänger nahen Endstellung (vgl. Figuren 1, 2 und 5 bis 10 für das erste Ausführungsbeispiel und Figur 13 für das zweite Ausführungsbeispiel) in die ausgefahrene, von dem Wohnwagenanhänger weiter entfernt liegende Endstellung (vgl. Figur 4 für das erste und Figur 15 für das zweite Ausführungsbeispiel). Hierzu kann er beispielsweise den Befestigungsbügel 14 bequem greifen und die Trageinrichtung 8 leicht von dem Wohnwagenanhänger wegschieben, nachdem er den Arretiermechanismus 24 gelöst hat. Dabei ist nahezu kein Kraftaufwand erforderlich, da keine Anheben und/oder keine Lagerungsänderung der Fahrräder erforderlich ist. In der ausgefahrenen Endstellung der Trageinrichtung 8 steht ausreichend Platz vor dem Wohnwagenanhänger zur Verfügung, dass der Benutzer auf den Stauraum im vorderen Bereich des Anhängers zugreifen, insbesondere eine Klappe im vorderen Anhängerbereich öffnen und Sachen verstauen und/oder entnehmen kann.

Da der Tragrahmen 11 durch das in der Aufsicht zumindest in etwa B-förmige Rohrprofil gebildet wird und für jedes Fahrrad zwei axial voneinander beabstandete Tragschienen 12 - anstelle von einer durchgehenden Tragschiene - vorgesehen sind, wird zuverlässig vermieden, dass die Trageinrichtung 8 beim Verschieben in die ausgefahrene Endstellung mit einer Einrichtung der Deichsel 4, beispielsweise einem Stützrad oder einer Handkurbel für ein solches, kollidiert. Die Trageinrichtung 8 kann im Ergebnis - auch bei Vorhandensein einer Deichseleinrichtung - ohne Probleme über den gesamten Verschiebeweg bewegt werden, so dass ausreichend Platz für den Zugriff auf den Stauraum erhalten wird.

Ist der Benutzer fertig, schiebt er die Trageinrichtung 8 bequem zurück in die eingefahrene Endstellung, wobei wiederum praktisch kein Kraftaufwand nötig ist und betätigt den Arretiermechanismus 24, damit sich die Trageinrichtung 8, insbesondere während der Fahrt, nicht ungewollt bewegen kann.

Da die Fahrräder zu allen Zeiten, auch bei dem Verschieben der Trageinrichtung 8, in einer vertikalen Position bleiben, wird zuverlässig verhindert, dass eine Beschädigung eines mit der Deichsel 4 verbundenen Zugfahrzeugs, beispielsweise einer Kofferraumklappe eines solchen, auftritt.

## Patentansprüche

1. Lastenträger für die Deichsel (4) eines Anhängers, mit einer an der Deichsel (4) zu befestigenden Basis (5) und einer an der Basis (5) gehaltenen Trageinrichtung (8), die wenigstens eine Aufnahme für eine Last aufweist, wobei die Basis (5) und die Trageinrichtung (8) über wenigstens zwei voneinander beabstandet angeordnete, einen Schiebeweg bereitstellende Schiebeführungen (9, 10) miteinander verbunden sind, die derart ausgebildet und angeordnet sind, dass die Trageinrichtung (8) mittels der Schiebeführungen (9, 10) relativ zu der Basis (5) von einer ersten eingefahrenen Endstellung in eine zweite ausgefahrene Endstellung insbesondere linear verschieblich ist, **dadurch gekennzeichnet, dass** die Trageinrichtung (8) ein Grundelement (11) aufweist, an welchem die wenigstens eine Aufnahme für eine Last gehalten ist, und welches eine in Richtung der ausgefahrenen Endstellung hin offene Ausnehmung zur Aufnahme einer Einrichtung der Deichsel (4) in der ausgefahrenen Endstellung der Trageinrichtung (8) aufweist.

2. Lastenträger nach Anspruch 1, **dadurch gekennzeichnet, dass** die Schiebeführungen als Teleskopführungen (9, 10) ausgebildet sind, die jeweils wenigstens zwei verschieblich aneinander gelagerte Teleskopelemente (18, 19, 31, 32) aufweisen.

3. Lastenträger nach Anspruch 2, **dadurch gekennzeichnet, dass** jede Teleskopführung (9, 10) zwei Teleskopelemente (18, 19, 31, 32) aufweist und jeweils ein Teleskopelement (18, 32) einer Teleskopführung (9, 10) an der Basis (5) und das jeweils andere Teleskopelement (19, 31) einer Teleskopführung (9, 10) an der Trageinrichtung (8) befestigt ist.

4. Lastenträger nach Anspruch 3, **dadurch gekennzeichnet, dass** jede Teleskopführung (9, 10) zwei Teleskopelemente (18, 19, 31, 32) aufweist und jeweils ein Teleskopelement einer Teleskopführung (9, 10) als Innenteleskop (18) und das jeweils andere Teleskopelement der Teleskopführung (9, 10) als Außenteleskop (19) ausgebildet ist.

5. Lastenträger nach einem der vorhergehenden Ansprüche, **dadurch gekennzeichnet, dass** die Schiebeführungen (9, 10) jeweils einen Rollensatz mit wenigstens zwei Rollen (20, 21) aufweisen, über den die Trageinrichtung (8) relativ zu der Basis (5) verschiebbar geführt ist.

6. Lastenträger nach einem der Ansprüche 2 bis 4 und 5, **dadurch gekennzeichnet, dass** jede Teleskopführung (9, 10) zwei Teleskopelemente (18, 19) aufweist und an jedem Teleskopelement (18, 19) jeweils eine Rolle (20, 21) gelagert ist.

7. Lastenträger nach einem der vorhergehenden Ansprüche, **dadurch gekennzeichnet, dass** in jeweils einem Teleskopelement (32) jeder Teleskopführung (9, 10) wenigstens eine sich in dessen Längsrichtung erstreckende Nut (33) vorgesehen ist und ein jeweils anderes Teleskopelement (31) jeder Teleskopführung (9, 10) wenigstens einen sich in dessen Längsrichtung erstreckenden Vorsprung (34) aufweist, wobei die Querschnittsform des wenigstens einen Vorsprungs (34) zu der Querschnittsform der wenigstens einen Nut (33) korrespondierend ausgebildet und der wenigstens eine Vorsprung (34) in der wenigstens einen Nut (33) angeordnet ist.

8. Lastenträger nach einem der vorhergehenden Ansprüche, **dadurch gekennzeichnet, dass** die Basis (5) und die Trageinrichtung (8) über genau zwei Schiebeführungen (9, 10) miteinander verbunden sind.

9. Lastenträger nach einem der vorhergehenden Ansprüche, **dadurch gekennzeichnet, dass** sich die Schiebeführungen (9, 10) zumindest im Wesentlichen parallel zueinander erstrecken.

10. Lastenträger nach einem der vorhergehenden Ansprüche, **dadurch gekennzeichnet, dass** der Schiebeweg wenigstens 25 cm beträgt.

11. Lastenträger nach einem der vorhergehenden Ansprüche, **dadurch gekennzeichnet, dass** der Schiebeweg zumindest in der ausgefahrenen Endstellung durch wenigstens einen Endstellungsanschlag (22) begrenzt ist.

12. Lastenträger nach einem der vorhergehenden Ansprüche, **dadurch gekennzeichnet, dass** die Anordnung derart getroffen ist, dass die Trageinrichtung (8) bei bestimmungsgemäßer Montage horizontal beweglich ist.

13. Lastenträger nach einem der vorhergehenden Ansprüche, **dadurch gekennzeichnet, dass** Arretiermittel (24) vorgesehen sind, mittels derer wenigstens eine Schiebeführung in der eingefahrenen Endstellung arretiert werden kann.

14. Lastenträger nach einem der vorhergehenden Ansprüche, **dadurch gekennzeichnet, dass** die wenigstens eine Aufnahme für eine Last zwei längliche Tragschienen (12), die jeweils obenseitig insbesondere U- oder V-förmige Nuten (13) für die Aufnahme eines Rades eines Fahrrades bilden, umfasst, wobei die beiden Tragschienen (12) auf einer gemeinsamen Achse und in axialer Richtung beabstandet zueinander angeordnet sind.

## Claims

1. Load carrier for the drawbar (4) of a trailer, having a base (5) to be fastened to the drawbar (4) and a carrying device (8) which is held on the base (5) and has at least one receptacle for a load, the base (5) and the carrying device (8) being connected to one another via at least two sliding guides (9, 10) which are arranged at a distance from one another, provide a sliding path and are designed and arranged in such a way that the carrying device (8) can be moved, in particular linearly, by means of the sliding guides (9, 10) relative to the base (5) from a first retracted end position into a second extended end position, **characterized in that** the carrying device (8) has a base element (11) on which the at least one receptacle for a load is held, and which has a recess which is open in the direction of the extended end position for receiving a device of the drawbar (4) in the extended end position of the carrying device (8).

2. Load carrier according to claim 1, **characterized in that** the sliding guides are formed as telescopic guides (9, 10) which each have at least two telescopic elements (18, 19, 31, 32) being displaceably mounted on one another.

3. Load carrier according to claim 2, **characterized in that** each telescopic guide (9, 10) has two telescopic elements (18, 19, 31, 32), in each case one telescopic element (18, 32) of a telescopic guide (9, 10) being fastened to the base (5) and the respective other telescopic element (19, 31) of a telescopic guide (9, 10) being fastened to the carrying device (8).

4. Load carrier according to claim 3, **characterized in that** each telescopic guide (9, 10) has two telescopic elements (18, 19, 31, 32), in each case one telescopic element of a telescopic guide (9, 10) being formed as an inner telescope (18) and the respective other telescopic element of the telescopic guide (9, 10) being formed as an outer telescope (19).

5. Load carrier according to one of the preceding claims, **characterized in that** the sliding guides (9, 10) each have a roller set with at least two rollers (20, 21) over which the carrying device (8) is displaceably guided relative to the base (5).

6. Load carrier according to one of claims 2 to 4 and 5, **characterized in that** each telescopic guide (9, 10) comprises two telescopic elements (18, 19) and a respective roller (20, 21) is mounted on each telescopic element (18, 19).

7. Load carrier according to one of the preceding claims, **characterized in that** at least one groove (33) extending in the longitudinal direction of each telescopic guide (9, 10) is provided in a respective telescopic element (32) of each telescopic guide (9, 10) and a respective other telescopic element (31) of each telescopic guide (9, 10) comprises at least one projection (34) extending in the longitudinal direction thereof, the cross-sectional shape of the at least one projection (34) being formed to correspond to the cross-sectional shape of the at least one groove (33), and the at least one projection (34) being arranged in the at least one groove (33).

8. Load carrier according to one of the preceding claims, **characterized in that** the base (5) and the carrier device (8) are connected to one another via exactly two sliding guides (9, 10).

9. Load carrier according to one of the preceding claims, **characterized in that** the sliding guides (9, 10) extend at least substantially parallel to one another.

10. Load carrier according to one of the preceding claims, **characterized in that** the sliding path is at least 25 cm.

11. Load carrier according to one of the preceding claims, **characterized in that** the sliding path is limited at least in the extended end position by at least one end position stop (22).

12. Load carrier according to one of the preceding claims, **characterized in that** the arrangement is such that the carrying device (8) is horizontally movable when properly mounted.

13. Load carrier according to one of the preceding claims, **characterized in that** locking means (24) are provided by means of which at least one sliding guide can be locked in the retracted end position.

14. Load carrier according to one of the preceding claims, **characterized in that** the at least one receptacle for a load comprises two elongate carrier rails (12) which each form at the top in particular U-shaped or V-shaped grooves (13) for receiving a wheel of a bicycle, the two carrier rails (12) being arranged on a common axis and spaced apart from one another in the axial direction.

## Revendications

1. Porte-charge pour le timon (4) d'une remorque, comprenant une base (5) à fixer sur le timon (4) et un dispositif porteur (8) qui est maintenu sur la base (5) et comporte au moins un logement pour une charge, la base (5) et le dispositif porteur (8) étant reliés entre eux par au moins deux guides coulissants (9, 10) qui sont disposés à une certaine distance, qui forment un trajet coulissant et sont conçus et disposés de telle manière, que le dispositif porteur (8) puisse être déplacé en particulier linéairement par le moyen des guides coulissants (9, 10) par rapport à la base (5) d'une première position finale rétractée dans une deuxième position finale déployée, **caractérisée en ce que** le dispositif porteur (8) présente un élément de base (11) sur lequel le au moins un logement pour une charge est maintenu, et qui présente un évidement qui est ouvert dans la direction de la position finale déployée pour recevoir un dispositif du timon (4) dans la position finale déployée du dispositif porteur (8).

2. Porte-charge selon la revendication 1, **caractérisée en ce que** les guides coulissants sont réalisés en forme de guidages télescopiques (9, 10) qui comportent chacun au moins deux éléments télescopiques (18, 19, 31, 32) montés l'un sur l'autre de manière mobile.

3. Porte-charge selon la revendication 2, **caractérisée en ce que** chaque guidage télescopique (9, 10) comporte deux éléments télescopiques (18, 19, 31, 32) et un élément télescopique (18, 32) d'un guidage télescopique (9, 10) est fixé au fond (5) et l'autre élément télescopique (19, 31) d'un guidage télescopique (9, 10) respectif est fixé au dispositif porteur (8).

4. Porte-charge selon la revendication 3, **caractérisée en ce que** chaque guidage télescopique (9, 10) comprend deux éléments télescopiques (18, 19, 31, 32) et un élément télescopique d'un guidage télescopique (9, 10) est respectivement conçu comme un télescope intérieur (18) et l'autre élément télescopique respectif du guidage télescopique (9, 10) est conçu comme télescope extérieur (19).

5. Porte-charge selon l'une des revendications précédentes, **caractérisée en ce que** les guides coulissants (9, 10) présentent chacune un kit de galets avec au moins deux galets (20, 21) sur lesquels le dispositif porteur (8) est guidé de manière mobile par rapport à la base (5).

6. Porte-charge selon l'une des revendications 2 à 4 et 5, **caractérisée en ce que** chaque guidage télescopique (9, 10) comprend deux éléments télescopiques (18, 19) et un galet respectif (20, 21) est monté sur chaque élément télescopique (18, 19).

7. Porte-charge selon l'une des revendications précédentes, **caractérisée en ce qu'**au moins une rainure (33) s'étendant dans la direction longitudinale de chaque guidage télescopique (9, 10) est prévue dans un élément télescopique respectif (32) de chaque guidage télescopique (9, 10) et un autre élément télescopique respectif (31) de chaque guidage télescopique (9, 10) présente au moins une saillie (34) s'étendant dans sa direction longitudinale, la forme en coupe transversale de la au moins une saillie (34) étant conçue pour correspondre à la forme en coupe transversale de la au moins une rainure (33), et la au moins une saillie (34) étant disposée dans la au moins une rainure (33).

8. Porte-charge selon l'une des revendications précédentes, **caractérisées en ce que** la base (5) et le dispositif porteur (8) sont reliés l'un à l'autre par exactement deux guides coulissants (9, 10).

9. Porte-charge selon l'une des revendications précédentes, **caractérisées en ce que** les guides coulissants (9, 10) s'étendent au moins sensiblement parallèlement les unes aux autres.

10. Porte-charge selon l'une des revendications précédentes, **caractérisée en ce que** le trajet coulissant est d'au moins 25 cm.

11. Porte-charge selon l'une des revendications précédentes, **caractérisée en ce que** le trajet coulissant est limité au moins dans la position finale deployée par au moins une butée de fin de course (22).

12. Porte-charge selon l'une des revendications précédentes, **caractérisée en ce que** l'arrangement est tel que le dispositif porteur (8) est mobile horizontalement lorsqu'il est correctement monté.

13. Porte-charge selon l'une des revendications précédentes, **caractérisée en ce qu'**il est prévu des moyens de verrouillage (24) au moyen desquels au moins un guide coulissant peut être verrouillé dans la position finale rétractée.

14. Porte-charge selon l'une des revendications précédentes, **caractérisée en ce que** le au moins un logement pour une charge comprend deux rails porteurs allongés (12) qui forment chacun au sommet, des rainures en particulier en forme de U ou de V (13) pour recevoir une roue d'un vélo, les deux rails porteurs (12) étant disposés sur un axe commun et séparés l'un de l'autre en direction axiale.
